# EUROPÄISCHE PATENTSCHRIFT

(11) **EP 0 965 199 B1**
(45) Veröffentlichungstag und Bekanntmachung des Hinweises auf die Patenterteilung: **16.11.2005**
(21) Anmeldenummer: 98913533.0
(22) Anmeldetag: 04.03.1998
(51) Int. Cl.: H04L 9/00

(54) **VERFAHREN ZUR EINBRINGUNG EINES DIENSTESCHLÜSSELS IN EIN ENDGERÄT UND VORRICHTUNGEN ZUR DURCHFÜHRUNG DES VERFAHRENS**
METHOD FOR INSERTING A SERVICE KEY IN A TERMINAL AND DEVICES FOR IMPLEMENTING SAID METHOD
PROCEDE PERMETTANT D'INTRODUIRE UNE CLE DE SERVICE DANS UN TERMINAL ET DISPOSITIFS CORRESPONDANTS

(30) Priorität: 04.03.1997 DE 19711037
(43) Veröffentlichungstag der Anmeldung: 22.12.1999
(73) Patentinhaber: ATX Europe GmbH, 40549 Düsseldorf (DE)
(72) Erfinder: VIEWEG, Stefan, D-40547 Düsseldorf (DE); JUNGEMANN, Matthias, D-52064 Aachen (DE); SCHMIDT, Maik, D-47179 Duisburg (DE); THOENISSEN, Michael, D-45128 Essen (DE)
(74) Vertreter: Meissner, Peter E.
(86) Internationale Anmeldenummer: PCT/DE1998/000677
(87) Internationale Veröffentlichungsnummer: WO 1998/039875

(56) Entgegenhaltungen:
- EP-A- 0 400 362
- EP-A- 0 664 627
- ZYGMUNT J HAAS ET AL: "LIMITED-LIFETIME SHARED-ACCESS IN MOBILE SYSTEMS" COMMUNICATIONS - GATEWAY TO GLOBALIZATION. PROCEEDINGS OF THE CONFERENCE ON COMMUNICATIONS, SEATTLE, JUNE 18 - 22, 1995, Bd. 3, Seiten 1404-1408, XP000534993

## Beschreibung

Die Erfindung betrifft ein Verfahren zur Einbringung eines Diensteschlüssels in ein Endgerät und Vorrichtungen zur Durchführung des Verfahrens.

Von einer Verkehrstelematikdienst-Zentrale werden über einen privaten (z.B. Mobilfunk) oder öffentlichen (z.B. DAB-Radio, RDS-TMC-Radio) Kommunikationskanal Dienstedaten an mindestens ein Endgerät übersandt. Dienstedaten können beispielsweise Daten für Verkehrsinformationen, Verkehrsprognosen, Navigationsdienste usw. sein, die von der Zentrale unidirektional an das Endgerät gesendet werden oder im bidirektionalen Dialog zwischen der Zentrale und dem Endgerät auf Anfrage übermittelt werden. Da die Erfassung und Aufbereitung derartiger Daten mit Kosten verbunden ist, werden sie in der Regel nur an zahlende Subscriber (gebuchte Dienstnutzer) übermittelt. Hierfür werden Dienstedaten von der Zentrale verschlüsselt an das Endgerät übermittelt. Dazu müssen im Endgerät und in der Zentrale zueinander passende Schlüssel vorgesehen sein. Bei bestimmten Anwendungen kann es auch wünschenswert sein, Diensteschlüssel für nur für einen Zeitraum gebuchte Dienstedaten im Endgerät nach einiger Zeit verfallen zu lassen oder zu aktualisieren. Hinsichtlich der Schlüsseleinbringung ist deshalb ein relativ hohes Sicherheitsniveau zur Vermeidung von Mißbrauch erforderlich. Bekannt aus anderen Bereichen, wie Fernsehen (Pay-TV), sind Verschlüsselungs- und Authentifizierungs-Verfahren. Zur Verschlüsselung und Entschlüsselung sind grundsätzlich symmetrische Verfahren (mit gleichem Verschlüsselungsschlüssel wie Entschlüsselungsschlüssel) und asymmetrische Verfahren (mit zueinander passendem, aber unterschiedlichem Verschlüsselungsschlüssel und Entschlüsselungsschlüssel) bekannt.

Der Artikel von Zygmunt J Haas et al "Limited-Lifetime Shared-Acces in Mobile Systems" Communications - Gateway to Globalization, Proceedings of the Confernence on Communications, Seattle, June 18 - 22, 1995, Bd. 3, Seiten 1404 - 1408, XP000534993, Seite 1405, linke Spalte, Zeile 3 - Seite 140, linke spalte, Zeile 10, offenbart ein beispielsweise für die Übermittlung elektronischer Zeitungen über ein Mobifunknetz geeignetes Verschlüsselungssystem, bei welchem ein User für das Abonnement einer elektronischen Zeitung an den Zeitungs-Server seine Kreditkartennummer und einen vom User generierten Schlüssel sendet, worauf der Zeitungs-Server in einem userspezifischen Ablagefach einen zum Dekodieren der elektronischen Zeitung geeigneten Entschlüsselungsschlüssel ablegt, welchen Entschlüsselungsschlüssel der User in seinem spezifischen Abholfach abholen kann, um die Zeitung zu entschlüssen.

Die EP 0 400 362 A2 offenbart ein Verfahren zur hierarchischen Schlüsselverwaltung mit symmetrischen Ver- und Entschlüsselungsverfahren für einen jeweils für eine Sitzung geltenden Sitzungsschlüssel, der von einer Dienstzentrale ohne Verwendung einer Schlüsselzentrale an Endgeräte gesandt wird.

Die EP 0 664 627 A1 offenbart ein auf die PID einer Mobilfunk-Teilnehmer-Identifikationskarte (SIM) bezogenes Verfahren zur Verbesserung der Verschlüsselungssicherheit bei der Kommunikation zwischen einer Vermittlungsstation und einem Kommunikationsendgerät bei Benutzung des Kommunikationsendgerätes durch eine Mehrzahl von Benutzern.

Aufgabe der Erfindung ist eine möglichst einfache, effiziente, kostengünstige Optimierung schlüsselbezogener Vorgänge. Die Aufgabe wird durch die Gegenstände der unabhängigen Ansprüche gelöst.

Die Erfindung ermöglicht eine einfache, effiziente und sichere Schlüsseleinbringung. Auch die Einbringung neuer Diensteschlüssel, welche beispielsweise nach Ablauf eines Subscriptions-Zeitraums für einen bestimmten Dienst erforderlich sein kann, wird einfach, effizient und sehr sicher ermöglicht. Dabei ist es zur Einbringung eines neuen Diensteschlüssels nicht erforderlich, das Endgerät in eine Werkstätte des Endgerät-Herstellers oder Dienste-Anbieters zu bringen; die Einbringung eines neuen Diensteschlüssels ist vielmehr erfindungsgemäß über Kommunikationskanäle, insbesondere Telefonfestnetz oder Mobilfunk, insbesondere Mobilfunk-Kurznachricht, möglich. Auch die Kommunikation zwischen einem Endgerät-Hersteller und einer Schlüsselzentrale (= Trust-Center) und/oder zwischen einer Dienstzentrale (Dienste-Anbieter) und einer Schlüsselzentrale und/oder zwischen Geräten eines Endgeräte-Herstellers und (bei der Entschlüsselungs-Schlüsseleinbringung bei der Herstellung) einem Telematik-Endgerät kann über einen Kommunikationskanal, wie insbesondere Mobilfunk (z.B. Mobilfunk-Kurznachrichten) erfolgen.

Für ein sicheres und dabei effizient ausführbares Verfahren ist es vorteilhaft, daß die Schlüssel-Behandlung in mehrere Phasen unterteilt ist. Dabei entspricht die erste Phase der Ausstattung eines Endgerätes mit einem herstellerspezifischen Schlüssel (Dekodierschlüssel). Die zweite Phase beinhaltet die verschlüsselte, insbesondere asymmetrisch verschlüsselte, Einbringung eines Diensteschlüssels von der Dienstzentrale zum Endgerät unter Verwendung eines Kodierschlüssels in der Dienstzentrale und eines Dekodierschlüssels im Endgerät. Die dritte Phase beinhaltet insbesondere die Verschlüsselung von Dienstedaten im Rahmen eines Dienstes und deren Übermittlung zwischen der Dienstzentrale und dem Endgerät; dabei werden im unidirektionalen Betrieb von der Dienstzentrale Dienstedaten verschlüsselt an das Endgerät gesandt und dort mit dem Diensteschlüssel entschlüsselt, während im bidirektionalen Verfahren eine Verschlüsselung von Anfragen eines Endgerätes bei der Dienstzentrale und/oder von übertragenen Dienstedaten der Dienstzentrale an das Endgerät möglich ist. Die Verschlüsselung von Dienstedaten mit einem symmetrischen Schlüssel ist besonders vorteilhaft, weil damit in Echtzeit relativ große Datenmengen im Rahmen eines Dienstes verschlüsselt und endgerätseitig ohne übermäßigen Aufwand in Echtzeit entschlüsselt werden können. Die asymmetrische Verschlüsselung des Diensteschlüssels ergibt hingegen die für seine Übertragung erforderliche höhere Sicherheit.

Besonders vorteilhaft ist die zusätzliche Nutzung von netzseitigen Sicherheitsmechanismen bei der Einbringung eines Diensteschlüssels von einer Dienstzentrale in das Endgerät, und zwar bei der Kommunikation zwischen der Dienstzentrale und der Schlüsselzentrale und/oder zwischen der Dienstzentrale und dem Endgerät. Ferner können netzseitige Sicherheitsmechanismen insbesondere auch verwendet werden, wenn der Endgeräte-Hersteller einen Entschlüsselungsschlüssel bei der Herstellung über ein Mobilfunknetz etc. in ein Telematik-Endgerät einbringt; jedoch ist bei der Herstellung auch eine Einbringung eines Entschlüsselungsschlüssels im Endgerät ohne einen Mobilfunkkanal etc. durch Hardware-Installation oder Software-Installation möglich. Netzseitige Sicherheitsmechanismen können bei der Kommunikation über ein Mobilfunknetz insbesondere SMSC-Adressen, MSISDN PIN-Nummer, PIN2-Nummer, etc. im GSM-Netz oder in anderen Netzen standardisiert vorgesehene Authentifikationsprüfungen sein. Die netzseitigen Sicherheitsmechanismen werden dabei zusätzlich zu anderen, insbesondere erfindungsgemäßen Mechanismen verwendet.

Die Endgerät-Identitätsnummer kann eine beliebige Nummer sein, welche ein bestimmtes Endgerät identifiziert. Sie kann im Endgerät insbesondere bei der Herstellung als Hardware und/oder Software fest eingegeben sein. Zweckmäßig ist sie gegen Manipulation und/oder unberechtigtes Auslesen geschützt.

Erfindungsgemäß kann ein Endgerät auch Diensteschlüssel von mehreren Dienstzentralen bekommen und zur Entschlüsselung von jeweils deren Dienstedaten verwenden.

Das erfindungsgemäße Verfahren ist dienstzentralen- seitig insbesondere als Programm realisierbar. Erfindungswesentliche Merkmale, wie das Verwalten von Dekodierschlüsseln und Diensteschlüsseln sind im Endgerät vorgesehen; die Behandlung von zueinander passenden Kodierschlüsseln und Dekodierschlüsseln sowie eventuell zusätzlich der Endgeräts-Identitätsnummer sind in einer Schlüsselzentrale realisiert.

Weitere wesentliche Merkmale der Erfindung sind in den Unteransprüchen sowie in der nachfolgenden Beschreibung eines Ausführungsbeispiels anhand der Zeichnung beschrieben. Dabei zeigt
- Fig. 1: schematisch grob abstrahiert die erfindungsgemäße Verwendung von Diensteschlüsseln, Kodierschlüsseln und Dekodierschlüsseln,
- Fig.2: eine Abwandlung der Version in Figur 1.

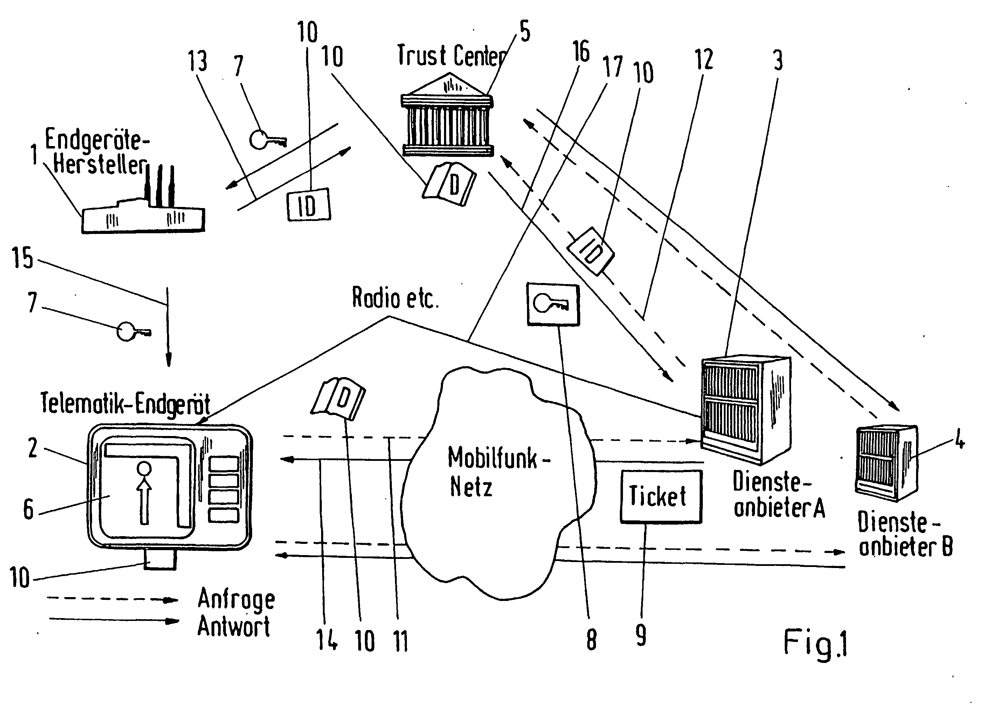

Figur 1 zeigt einen Endgerät-Hersteller 1, ein Endgerät 2 für Verkehrstelematikdienste, zwei Dienstzentralen 3,4, sowie eine Schlüsselzentrale 5.

Ein Endgerät 2 für Verkehrstelematikdienste kann beispielsweise zum Darstellen von Verkehrsinformationen und/oder Verkehrsprognosen und/oder Navigationsinformationen ausgebildet sein. Dabei können am Verkehrstelematikendgerät für interaktive Dienste wie Navigationshilfen interne oder externe Eingabemittel wie Tastaturen, Spracheingabe etc. vorgesehen sein. Ferner kann im Endgerät 2 eine Aufbereitung von Dienstedaten und/oder Positionserfassung etc. erfolgen. Die Ausgabe kann optisch und/oder akustisch erfolgen. Im dargestellten Beispiel wird in einem Display 6 im Endgerät 2 die Position des Endgerätes mit einem Pfeil und einem Punkt gekennzeichnet, sowie eine nahegelegene Straße mit Name und Entfernungsangabe angeben, sowie darüber eine weitere Straße als Balken angegeben. Jedoch ist das erfindungsgemäße Verfahren auch für beliebige anders aufgebaute Endgeräte einsetzbar.

Bei der Herstellung des Endgerätes 2 beim Endgeräthersteller 1 wird vom Endgeräthersteller in das Endgerät 2 ein als Symbol dargestellter Dekodierschlüssel 7 eingebracht, welcher (bei einem insbesondere asymmetrischen Verfahren) zur Dekodierung eines in einer Dienstzentrale mit einem (ebenfalls symbolisch dargestellten) Kodierschlüssel 8 verschlüsselten Diensteschlüssels 9 verwendbar ist. Hier wird mit dem Kodierschlüssel 8 verschlüsselt ein Diensteschlüssel 9 (in Figur 1 bezeichnet als "Ticket") von einer Dienstzentrale 3 oder 4 an ein Endgerät 2 übertragen, wodurch dem Endgerät mit dem Diensteschlüssel 9 die Dekodierung von Dienstedaten (betreffend Verkehrsinformation, Navigation etc.) ermöglicht wird, welche eine Dienstzentrale 3, 4 zu einem beliebigen Zeitpunkt (mit einem derartigen Diensteschlüssel 9 verschlüsselt) über einen öffentlichen Kommunikationskanal wie Radio (DAB, RDS-TMC etc.) aussendet (17).

Bei der Herstellung des Endgerätes 2 beim Endgeräthersteller 1 wird in das Endgerät 2 neben dem Dekodierschlüssel 7 auch eine Endgerät- Identifikationsnummer fest implementiert. Die Endgeräts-Identifikationssnummer kann jedoch bereits vor der Fertigstellung (mit Dekodierschlüsseleingabe) des Endgeräts beim angegebenen Endgerätehersteller im Endgerät (zu einem früheren Zeitpunkt bei einem Zulieferer etc.) implementiert sein. Die Endgeräts- Identitäts- Nummer muß nicht nur aus Zahlen bestehen, sondern kann beispielsweise auch Buchstaben umfassen. Sie kann eine beliebige, ein Endgerät identifizierende, im Endgerät implementierte Sequenz sein.

Der Dekodierschlüssel 7, welcher von dem Endgeräthersteller 1 dem Endgerät 2 bei der Herstellung (oder analog bei einer späteren Anpassung des Endgerätes an das erfindungsgemäße Schlüssel- System) implementiert wird, wird dem Endgeräthersteller 1 von einer Schlüsselzentrale 5 übermittelt. Die Übermittlung von der Schlüsselzentrale zum Endgeräthersteller kann dabei auch kodiert oder mit sonstigen Sicherheitsmaßnahmen erfolgen. Ferner wird im Beispiel in Figur 1 vom Endgeräthersteller 1 an die Schlüsselzentrale 5 eine Endgeräts-Identitätsnummer übertragen, welche der Schlüsselzentrale die Zuordnung des Dekodierschlüssels 7 zu einer Endgeräts- Identitätsnummer und damit zu einem Endgerät erlaubt. Damit kann bei einer Anfrage der Dienstzentrale 3 oder 4 (auf eine Anfrage des Endgeräts 2 mit der Endgeräts-Identitätsnummer 10 bei der Dienstzentrale 3 oder 4 mit der Bitte um einen Diensteschlüssel 9 hin) mit Angabe der (weitergegebenen) Endgeräts-Identitätsnummer 10 die Schlüsselzentrale 5 über die Endgeräts- Identitätsnummer 10 dem schon vergebenen (hier auf ein bestimmtes Endgerät 2 bezogenen) Dekodierschlüssel 7 den passenden Kodierschlüssel 8 (welcher letzterer von der Schlüsselzentrale an die Dienstzentrale 4 übergeben werden soll) zuordnen. Die Zuordnung kann jedoch auch aufgrund Daten innerhalb des Kodierschlüssels und Dekodierschlüssels erfolgen; beispielsweise können in diesem Fall bestimmte Bit- Sequenzen im Kodierschlüssel oder Dekodierschlüssel übereinstimmen oder in der Dienstzentrale bekannt oder einander zugeordnet sein.

Der Ablauf zum kodierten Einbringen eines Diensteschlüssels 9 (für Dienstedaten) von einer Dienstzentrale 3 oder 4 in ein Endgerät 2 kann insbesondere folgendes umfassen:
Das Endgerät 2 fragt (im Schritt 11) bei einer Dienstzentrale 3 oder 4 nach einem Diensteschlüssel. Dabei übergibt das Endgerät 2 seine Endgeräts- Identitätsnummer etc. an die Dienstzentrale 3 oder 4. Diese Kommunikation kann über ein Kommunikationsnetz, insbesondere Mobilfunknetz, z. B. als Mobilfunk-Kurznachricht (zum Beispiel GSM-SMS) erfolgen ebenso wie die darauf folgende Antwort. Die Dienstzentrale überprüft, ob sie für das (durch die übermittelte Endgeräts-Identitätsnummer 10 etc. identifizierte) Endgerät 2 einen Kodierschlüssel 8 (zum kodieren von zu übermittelten Diensteschlüsseln) hat. Im vorliegenden Fall hat die Dienstzentrale 3, 4 noch keinen Kodierschlüssel 8 für das Endgerät 2. Sie fragt deshalb im Schritt 12 unter Übermittlung der (vom Endgerät übermittelten) Endgeräts-Identitätsnummer bei der Schlüsselzentrale um Übermittlung eines Kodierschlüssels 8 an. Dabei kann die Kommunikation zwischen der Dienstzentrale und der Schlüsselzentrale über einen Kommunikationskanal wie z. B. Mobilfunk, insbesondere Mobilfunk-Kurznachricht (insbesondere GSM-SMS) erfolgen. Die Schlüsselzentrale 5 überprüft hier anhand der von der Dienstzentrale 3, 4 an sie übermittelten Endgeräts-Identitätsnummer 10, ob sie einen zur Endgeräts- Identitätsnummer passenden Kodierschlüssel 8 für das Endgerät 2 hat. Wenn ein Kodierschlüssel 8 der Endgeräts-Identitätsnummer 10 etc. zuordenbar ist, übermittelt die Schlüsselzentrale 5 der Dienstzentrale 3 oder 4 einen zum Endgerät 2 passenden Kodierschlüssel 8. Die Dienstzentrale 4 kodiert mit dem Kodierschlüssel 8 einen Diensteschlüssel und übermittelt ihn (im Schritt 14) an das Endgerät 2. Das Endgerät 2 dekodiert mit seinem (bei der Herstellung etc. implementierten) Dekodierschlüssel 7 den (kodiert übermittelten) Diensteschlüssel 9. Darauf kann das Telematikendgerät 2 auf diesen Diensteschlüssel 9 bezogene Daten, welche einer Dienstzentrale 3 oder 4 per Mobilfunk oder per Radio etc. (mit 9 verschlüsselt) ausstrahlt mit dem Diensteschlüssel 9 dekodieren. Für verschiedene Dienste einer Dienstzentrale können jeweils eigene Diensteschlüssel 9 vorgesehen sein.

Die Ermöglichung der Zuordnung einer von der Dienstzentrale an die Schlüsselzentrale 5 übermittelten Endgeräts-Identitätsnummer 10 zu einem zugehörigen Kodierschlüssel 8 erfolgt im Beispiel in Figur 1 folgendermaßen: Bei der Herstellung des Endgeräts 2 beim Endgeräthersteller 1 fragt der Endgeräthersteller unter Übergabe der Endgeräts- Identitätsnummer 10 bei der Schlüsselzentrale 5 um Übermittlung eines Dekodierschlüssels 7 an. Die Schlüsselzentrale 5 ordnet intern die (im Schritt 13 übermittelte) Endgeräts-Identitätsnummer 10 des Endgerätes 2 demjenigen Dekodierschlüssel 7 zu, welchen sie für das Endgerät 2 mit der speziellen übermittelten Endgeräts-Identiätsnummer 10 dem Endgeräthersteller 1 (zur Weitergabe an das Endgerät 2 im Schritt 15) übermittelt. Dabei ordnet die Schlüsselzentrale 5 der Endgeräts-Identitätsnummer 10 eines bestimmten Endgerätes 2 einen zu dem (dem Endgerät übermittelten) Dekodierschlüssel 7 passenden Kodierschlüssel 8 zu, welcher später einer Dienstzentrale 3 oder 4 übermittelt wird, wenn sie unter Angabe der Endgeräts-Identitätsnummer 10 (im Schritt 12) bei der Schlüsselzentrale um einen Kodierschlüssels anfragt. Damit ist gewährleistet, daß die Dienstzentrale 3 oder 4 einen Kodierschlüssel 8 kennt, der zu einem Dekodierschlüssel 7 paßt, welcher in einem Endgerät 2 implementiert ist, und daß die Dienstzentrale 3 oder 4 den Kodierschlüssel 8 aufgrund der Endgeräts-Identitätsnummer 10 zuordnen kann, so daß eine Dienstzentrale 3 oder 4 über den Kodierschlüssel 8 an ein hier bekanntes Endgerät 2 gezielt einen (nur von diesem mit seinem Dekodierschlüssel 7 entschlüsselbaren) Diensteschlüssel 9 für einen bestimmten Dienst übermitteln kann.

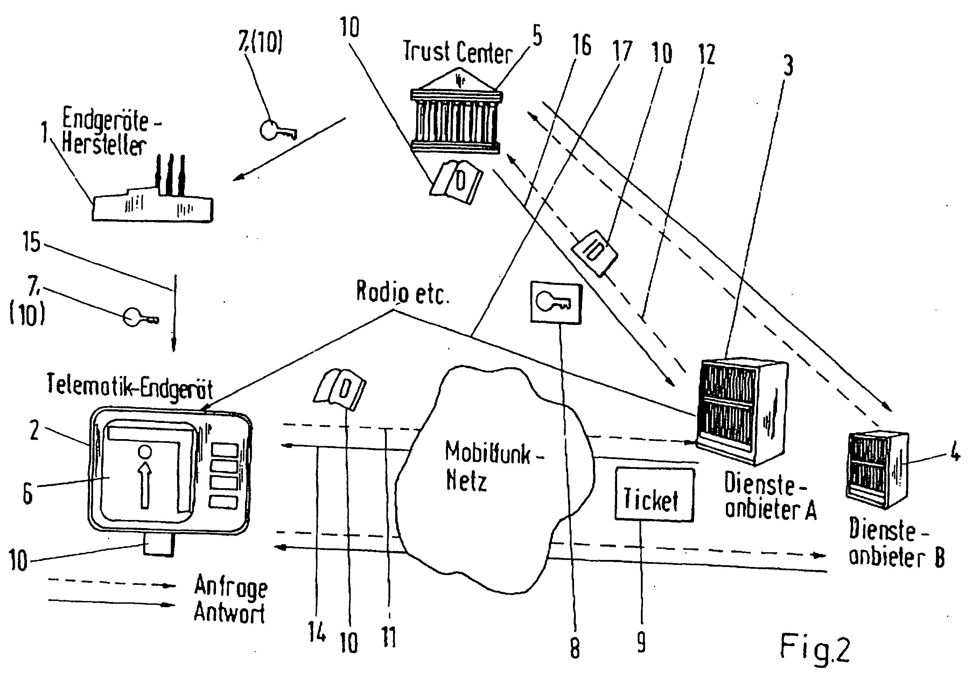

Jedoch sind (wie in Figur 2 angedeutet) auch andere Zuordnungsmöglichkeiten des Kodierschlüssels und Dekodierschlüssels in der Schlüsselzentrale 5 möglich; Diese können insbesondere in einer Zuordnung von Anfangssequenzen (oder analog Schlußsequenzen) in einem Dekodierschlüssel 7 bestehen, welche Anfangssequenzen im Kodierschlüssel 8 identisch sind oder (in der Schlüsselzentrale 5 und/oder einer Dienstzentrale 3, 4 bekannte Weise) entsprechen. Derartigen Anfangssequenzen in einem Kodierschlüssel und Dekodierschlüssel sind einer Endgeräts- Identitätsnummer 10 gemäß dem Beispiel in Figur 1 äquivalent. Beispielsweise kann eine Schlüsselzentrale 5 einem Endgeräthersteller in einem Datensatz mit dem eigentlichen Dekodierschlüssel 7 zusammen eine Anfangssequenz etc. übermittelten, die dort (1) in das Endgerät eingegeben wird; bei einer Diensteschlüsselanfrage 11 des Endgerät bei einer Dienstzentrale kann das Endgerät diese Anfangssequenz etc. an die Dienstzentrale 3 übergeben, welche diese an die Schlüsselzentrale weiterübergibt (12), wo eine Zuordnung zu einem (zum Dekodierschlüssel des Endgeräts passenden) Kodierschlüssel erfolgt, welcher letzterer (8) der Dienstzentrale 3 übergeben (3) wird.

## Patentansprüche

1. Verfahren zur Einbringung eines Diensteschlüssels (9) in ein Endgerät (2), durch welchen Diensteschlüssel (9) von einer Dienstzentrale (3) über einen Kommunikationskanal (14) mit einem Diensteschlüssel (9) verschlüsselt ausgesandte Dienstedaten durch das Endgerät (2) entschlüsselbar (9) sind,
wobei die Dienstzentrale (3) auf eine, eine Endgeräts-Identitätsnummern- Übermittlung (10) enthaltende Diensteschlüsselübermittlungsanfrage (11) des Endgeräts (2) bei der Dienstzentrale (3) hin unter Weiterübermittlung (12) der Endgeräts-Identitätsnummer (10) an eine Schlüsselzentrale (5) bei dieser (5) einen Kodierschlüssel (8) anfragt (12) und erhält (16),
wobei letzterer Kodierschlüssel (8) einem dem Endgerät (2) herstellerseitig (1) eingegebenen (15) Dekodierschlüssel (7) derart zugeordnet ist, daß mit dem Kodierschlüssel (8) verschlüsselte Diensteschlüssel (9) mit dem Dekodierschlüssel (7) entschlüsselbar sind,
wobei die Dienstzentrale (3), (4) mit dem von der Schlüsselzentrale (5) erhaltenen Kodierschlüssel (8) einen Diensteschlüssel (9) verschlüsselt und dem Endgerät (2) übermittelt, in welchem Endgerät (2) der Diensteschlüssel (9) mit dem Dekodierschlüssel (7) entschlüsselbar ist.

2. Verfahren nach Anspruch 1,
**dadurch gekennzeichnet,**
**daß** eine Dienstzentrale (3) von einer Schlüsselzentrale (5) einen Kodierschlüssel (8) nur im Falle einer der Schlüsselzentrale (5) bekannten Endgeräts-Identitätsnummer (10) erhält.

3. Verfahren nach einem der vorhergehenden Ansprüche,
**dadurch gekennzeichnet,**
**daß** die Endgeräts-Identitätsnummer (10) der Schlüsselzentrale (5) vom Endgeräthersteller übermittelt wird, wenn dieser (1) bei der Schlüsselzentrale (5) einen Dekodierschlüssel (7) anfragt, wobei in der Schlüsselzentrale (5) die Endgeräts-Identitätsnummer (10) dem übergebenden Dekodierschlüssel (7) und einem einer Dienstzentrale (3) auf Anfrage zu übergebenden Kodierschlüssel (8) zu geordnet wird.

4. Verfahren nach einem der vorhergehenden Ansprüche,
**dadurch gekennzeichnet,**
**daß** die Dienstzentrale eine Verkehrstelematik - Dienstzentrale ist, daß der Diensteschlüssel ein Diensteschlüssel zum Entschlüsseln von Verkehrstelematikdienst-Daten ist und daß das Endgerät für Verkehrstelematikdienste verwendbar ist.

5. Verfahren nach einem der vorhergehenden Ansprüche,
**dadurch gekennzeichnet,**
**daß** die Übermittlung zwischen dem Endgerät und der Dienstzentrale per Funk erfolgt.

6. Verfahren nach Anspruch 5,
**dadurch gekennzeichnet,**
**daß** die Übermittlung per Mobilfunk erfolgt.

7. Verfahren nach Anspruch 6,
**dadurch gekennzeichnet,**
**daß** die Übermittlung als Point-to-Point-Mobilfunkkurznachricht (GSM-SMS) erfolgt.

8. Verfahren nach einem der vorhergehenden Ansprüche,
**dadurch gekennzeichnet,**
**daß** die Kommunikation zwischen der Dienstzentrale (3) und der Schlüsselzentrale (5) über ein Telefonfestnetz oder per Funk erfolgt.

9. Verfahren nach Anspruch 8,
**dadurch gekennzeichnet,**
**daß** die Kommunikation per Mobilfunk erfolgt.

10. Verfahren nach Anspruch 9,
**dadurch gekennzeichnet,**
**daß** die Kommunikation per Point-to-Point-Mobilfunk-Kurznachricht (GSM-SMS) erfolgt.

11. Verfahren nach einem der vorhergehenden Ansprüche,
**dadurch gekennzeichnet,**
**daß** bei einer Kommunikation auf Mobilfunk - spezifische Sicherheitsfunktionen, insbesondere Telefonnummer und/oder MSISDN und/oder PIN-Nummer, zurückgegriffen wird, wobei eine Schlüsselübermittlung nur bei erfolgreicher Sicherheitsüberprüfung erfolgt.

12. Verfahren nach einem der vorhergehenden Ansprüche,
**dadurch gekennzeichnet,**
**daß** ein Endgerät (2) von mehreren Dienstzentralen (3), (4) Diensteschlüssel (9) und/oder über eine Schlüsselzentrale (5) zugehörige Dekodierschlüssel (7) erhalten kann.

13. Verfahren nach einem der vorhergehenden Ansprüche,
**dadurch gekennzeichnet,**
**daß** Diensteschlüssel von einer Dienstzentrale (3) an ein Endgerät (2) asymmetrisch verschlüsselt übertragen werden.

14. Verfahren nach einem der vorhergehenden Ansprüche,
**dadurch gekennzeichnet,**
**daß** Dienstedaten von einer Dienstzentrale an ein Endgerät (2) symmetrisch verschlüsselt übertragen (17) werden.

## Claims

1. Method for inserting a service key (9) in a terminal (2), by means of which service key (9) service data, which are transmitted encoded with a service key (9) from a service central office (3) via a communications channel (14), can be decoded (9) by the terminal (2),
wherein the service central office (3), upon a service key transmission request (11) of the terminal (2), which contains a terminal identity number transmission (10), at the service central office (3) via retransmission (12) of the terminal identity number (10) to a key central office (5), requests (12) and obtains (16) a code key (8) at the latter (5),
wherein the latter code key (8) is assigned to a decoding key (7), which is input on the producer-side (1) to the terminal (2) in such a manner that service keys (9), which are encoded with the code key (8), can be decoded with the decoding key (7),
wherein the service central office (3), (4) encodes a service key (9) with the code key (8), which is obtained from the key central office (5), and transmits it to the terminal (2), in which terminal (2) the service key (9) can be decoded with the decoding key (7).

2. Method according to claim 1,
**characterised in that**
a service central office (3) obtains from a key central office (5) a code key (8) only in the case of a terminal identity number (10) which is known to the key central office (5).

3. Method according to one of the preceding claims,
**characterised in that**
the terminal identity number (10) of the key central office (5) is transmitted by the terminal producer when the latter (1) requests a decoding key (7) at the key central office (5), the terminal identity number (10) being assigned in the key central office (5) to the decoding key (7) to be handed over and to a code key (8) to be handed over to a service central office (3) in response to a request.

4. Method according to one of the preceding claims,
**characterised in that**
the service central office is a traffic telematics service central office, **in that** the service key is a service key for decoding traffic telematics service data and **in that** the terminal can be used for traffic telematic services.

5. Method according to one of the preceding claims,
**characterised in that**
the transmission between the terminal and the service central office is effected by radio.

6. Method according to claim 5,
**characterised in that**
the transmission is effected by mobile radio.

7. Method according to claim 6,
**characterised in that**
the transmission is effected as point-to-point mobile radio short message (GSM-SMS).

8. Method according to one of the preceding claims,
**characterised in that**
the communication between the service central office (3) and the key central office (5) is effected via a telephone fixed network or by radio.

9. Method according to claim 8,
**characterised in that**
the communication is effected by mobile radio.

10. Method according to claim 9,
**characterised in that**
the communication is effected by point-to-point mobile radio short message (GSM-SMS).

11. Method according to one of the preceding claims,
**characterised in that**
in the case of a communication by mobile radio - specific security functions, in particular telephone number and/or MSISDN and/or PIN number are resorted to, a key transmission only being effected upon a successful security check.

12. Method according to one of the preceding claims,
**characterised in that**
a terminal (2) can obtain service keys (9) from a plurality of service central offices (3), (4) and/or associated decoding keys (7) via a key central office (5).

13. Method according to one of the preceding claims,
**characterised in that**
service keys are transmitted from a service central office (3) to a terminal (2) encoded asymmetrically.

14. Method according to one of the preceding claims,
**characterised in that**
service data are transmitted from a service central office to a terminal (2) encoded symmetrically.

## Revendications

1. Procédé pour entrer une clé de service (9) dans un terminal (2), ladite clé de service (9) permettant au terminal (2) de déverrouiller des données de services émises verrouillées avec une clé de service (9) par une centrale de services (3) par l'intermédiaire d'un canal de communication (14),
la centrale de services (3), lors d'une demande de transmission de clé de service (11) faite auprès de la centrale de services (3) par le terminal (2) et contenant une transmission d'un numéro d'identité de terminal (10), demandant (12) une clé de codage (8) à une centrale de verrouillage (5) en lui retransmettant (12) le numéro d'identité de terminal (10) et le recevant (16),
ladite clé de codage (8) étant associée à une clé de décodage (7) entrée (15) dans le terminal (2) côté fabricant (1), de telle sorte que des clés de service (9) codées avec la clé de codage (8) sont décodables avec la clé de décodage (7),
la centrale de services (3), (4) codant, avec la clé de codage (8) reçue de la centrale de verrouillage (5), une clé de service (9) et la transmettant au terminal (2), dans lequel terminal (2) la clé de service (9) est décodable avec la clé de décodage (7).

2. Procédé selon la revendication 1,
**caractérisé en ce qu'**une centrale de services (3) ne reçoit d'une centrale de verrouillage (5) une clé de codage (8) que dans le cas d'un numéro d'identité de terminal (10) connu par la centrale de codage (5).

3. Procédé selon l'une des revendications précédentes,
**caractérisé en ce que** le numéro d'identité de terminal (10) est transmis à la centrale de verrouillage (5) par le fabricant de terminaux (1) lorsque celui-ci demande auprès de la centrale de verrouillage (5) une clé de décodage (7), le numéro d'identité de terminal (10) devant être associé, dans la centrale de verrouillage (5), à la clé de décodage remise (7) et à une clé de codage (8) à remettre sur demande à une centrale de services (3).

4. Procédé selon l'une des revendications précédentes,
**caractérisé en ce que** la centrale de services est une centrale de services de télématique de circulation, **en ce que** la clé de service est une clé de service pour décoder des données de services de télématique de circulation et **en ce que** le terminal est utilisable pour des services de télématique de circulation.

5. Procédé selon l'une des revendications précédentes,
**caractérisé en ce que** la transmission entre le terminal et la centrale de services a lieu par radio.

6. Procédé selon la revendication 5,
**caractérisé en ce que** la transmission a lieu par radiotéléphonie mobile.

7. Procédé selon la revendication 6,
**caractérisé en ce que** la transmission a lieu en tant que SMS de radiotéléphonie mobile point à point (GSM-SMS).

8. Procédé selon l'une des revendications précédentes,
**caractérisé en ce que** la communication entre la centrale de services (3) et la centrale de verrouillage (5) a lieu par l'intermédiaire d'un réseau téléphonique fixe ou par radio.

9. Procédé selon la revendication 8,
**caractérisé en ce que** la communication a lieu par radiotéléphonie mobile.

10. Procédé selon la revendication 9,
**caractérisé en ce que** la communication a lieu par SMS de radiotéléphonie mobile point à point.

11. Procédé selon l'une des revendications précédentes,
**caractérisé en ce que**, lors d'une communication, il est recouru à des fonctions de sécurité spécifiques à la radiotéléphonie mobile, en particulier numéro de téléphone et/ou MSISDN et/ou numéro PIN, une transmission de clé n'étant effectuée qu'en cas de contrôle de sécurité réussi.

12. Procédé selon l'une des revendications précédentes,
**caractérisé en ce qu'**un terminal (2) peut recevoir des clés de service (9) de plusieurs centrales de services (3), (4) et/ou des clés de décodage (7) associées par l'intermédiaire d'une centrale de verrouillage (5).

13. Procédé selon l'une des revendications précédentes,
**caractérisé en ce que** des clés de service sont transmises verrouillées de manière asymétrique par une centrale de services (3) à un terminal (2).

14. Procédé selon l'une des revendications précédentes,
**caractérisé en ce que** des données de services sont transmises (17) verrouillées de manière symétrique par une centrale de services à un terminal (2).
